# EUROPEAN PATENT APPLICATION

(11) **EP 4 642 126 A1**
(43) Date of publication of application: **29.10.2025**
(21) Application number: 22968962.5
(22) Date of filing: 22.12.2022
(51) Int. Cl.: H04W 72/04, H04W 52/02

(54) **R-TWT PROTOCOL ADJUSTMENT METHOD AND APPARATUS, AND DEVICE AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2022/141168
(87) International publication number: WO 2024/130667

(57) **Abstract**

The embodiments of the present disclosure relate to the technical field of communications. Provided are a restricted target wake time (R-TWT) schedule adjustment method and apparatus, and a device and a storage medium, which can be applied to a first AP device. The method comprises : receiving at least one first frame, wherein each first frame comprises a first R-TWT schedule between one second AP device and at least one station (STA) device in a basic service set (BSS) of the second AP device, and a first AP device and each second AP device form an overlapping basic service set (OBSS); and adjusting at least one second R-TWT schedule according to each received first R-TWT schedule, wherein each second R-TWT schedule is an R-TWT schedule between the first AP device and one STA device in the BSS of the first AP device. In the embodiments of the present disclosure, in an OBSS scenario, an R-TWT schedule between at least one AP device and at least one STA device in a BSS of the AP device can be coordinated, so as to reduce interference between low-latency service communications between BSSs in the OBSS scenario.

## Description

### TECHNICAL FIELD

The embodiments of the present disclosure relate to the field of communication technology. Specifically, the embodiments of the present disclosure relate to an R-TWT schedule adjustment method, apparatus, device, and storage medium.

### BACKGROUND

With the continuous development of Wireless Fidelity (Wi-Fi) technology, researchers have proposed the Restricted Target Wake Time (R-TWT) schedule to ensure low-latency service communications. During the service period (SP) of the R-TWT schedule, only services marked as low-latency can communicate, and other services need to be suspended or postponed.

However, the currently established R-TWT schedule is limited to the access point (AP) device and station (STA) device within a single basic service set (BSS). With the diversified needs of communication services and the development trend of high frequency bands, WLAN equipment deployment is becoming more and more dense, and the case of overlapping basic service sets (OBSS) is becoming more and more common. The R-TWT mechanism can effectively ensure the priority transmission of low-latency services within the BSS, but in the OBSS scenario, if the R-TWT SPs in the respective BSSs are independent of each other, the service time of the R-TWT schedule of different BSSs may conflict, resulting in signal interference between BSSs. Based on this, a method for adjusting the R-TWT schedule is needed to reduce potential signal conflicts.

### SUMMARY

The embodiments of the present disclosure provide an R-TWT schedule adjustment method, apparatus, device and storage medium, which can coordinate the R-TWT schedule between at least one AP device in an OBSS scenario and at least one STA device in the BSS, so as to reduce interference between low-latency service communications between BSSs in the OBSS scenario.

In a first aspect, an embodiment of the present disclosure provides an R-TWT schedule adjustment method, which can be applied to a first AP device, and the method includes:
receiving at least one first frame, each first frame includes a first restricted target wake-up time (R-TWT) schedule between a second AP device and at least one station (STA) device in a basic service set (BSS) of the second AP device, and the first AP device and each second AP devices form an overlapping basic service set (OBSS); and
adjusting at least one second R-TWT schedule according to each received first R-TWT schedule, and each second R-TWT schedule is an R-TWT schedule between the first AP device and the STA device in the BSS of the first AP device.

In a second aspect, an embodiment of the present disclosure further provides an R-TWT schedule adjustment apparatus, and the apparatus includes:
a communication unit, configured to receive at least one first frame, each first frame includes a first restricted target wake-up time (R-TWT) schedule between a second AP device and at least one station (STA) device in a basic service set (BSS) of the second AP device, and the first AP device and each second AP devices form an overlapping basic service set (OBSS); and
an adjusting unit, configured to adjust at least one second R-TWT schedule according to each received first R-TWT schedule, and each second R-TWT schedule is an R-TWT schedule between the first AP device and the STA device in the BSS of the first AP device.

In a third aspect, an embodiment of the present disclosure further provides an AP device, including a memory, a processor, and a computer program stored in the memory and executable on the processor, wherein when the processor executes the program, an R-TWT schedule adjustment method as provided in an embodiment of the present disclosure is implemented.

In a sixth aspect, an embodiment of the present disclosure further provides a computer-readable storage medium, on which a computer program is stored, and when the computer program is executed by a processor, the R-TWT schedule adjustment method provided in the embodiment of the present disclosure is implemented.

An embodiment of the present disclosure provides an R-TWT schedule adjustment method, which can coordinate, in an OBSS scenario, the R-TWT schedule between at least one AP device and at least one STA device in the BSS, so as to reduce interference between low-latency service communications between BSSs in the OBSS scenario.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the drawings required for use in the description of the embodiments of the present disclosure will be briefly introduced below. Obviously, the drawings in the following description are only some embodiments of the present disclosure. For those of ordinary skill in the art, other drawings can be obtained based on these drawings without creative effort.
FIG. 1 is a flow chart of an R-TWT schedule adjustment method provided in an embodiment of the present disclosure;
FIG. 2 is a schematic diagram of a first example of an embodiment of the present disclosure;
FIG. 3 is a second schematic diagram of the first example of the embodiment of the present disclosure;
FIG. 4 is a schematic diagram of an OBSS scenario provided by an embodiment of the present disclosure;
FIG. 5 is a schematic diagram of the structure of an R-TWT schedule adjustment apparatus provided in an embodiment of the present disclosure; and
FIG. 6 is a schematic diagram of the structure of an electronic device provided in an embodiment of the present disclosure.

### DETAILED DESCRIPTION

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "plurality" in the embodiments of the present disclosure refers to two or more than two, and other quantifiers are similar thereto.

Exemplary embodiments will be described in detail herein, examples of which are shown in the accompanying drawings. Unless otherwise indicated, when the following description refers to the drawings, the same numbers in different drawings represent the same or similar elements. The embodiments described in the following exemplary embodiments do not represent all embodiments consistent with the present invention. Instead, they are merely examples of devices and methods consistent with some aspects of the present invention as detailed in the appended claims.

The terms used in this disclosure are for the purpose of describing specific embodiments only and are not intended to limit the disclosure. The singular forms "a", "said" and "the" used in this disclosure and the appended claims are also intended to include plural forms unless the context clearly indicates otherwise. It should also be understood that the term "and/or" used herein refers to and includes any or all possible combinations of one or more associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at the time of" or "when" or "in response to determining".

Hereinafter, the technical solutions in the embodiments of the present disclosure will be described clearly and completely in conjunction with the drawings in the embodiments of the present disclosure. Obviously, the described embodiments are only part of the embodiments of the present disclosure, not all of the embodiments. Based on the embodiments in the present disclosure, all other embodiments obtained by those of ordinary skill in the art without creative effort are within the scope of protection of the present disclosure.

In the disclosure, the method and the device are based on the same disclosure concept. Since the principles of solving problems by the method and the device are similar, the implementation of the device and the method can refer to each other, and the repeated parts will not be described.

In the disclosure, the AP device may be a wireless switch for a wireless network and also an access device for the wireless network. The AP device may include software applications and/or circuits so that other types of nodes in the wireless network can communicate with the outside and inside of the wireless network through the AP device. As an example, the AP device may be a terminal device or a network device equipped with a Wi-Fi chip.

In the disclosure, the STA devices may specifically include but are not limited to: cellular phones, smart phones, wearable devices, computers, personal digital assistants (PDAs), personal communication system (PCS) devices, personal information managers (PIMs), personal navigation devices (PNDs), global positioning systems, multimedia devices, Internet of Things (IoT) devices, etc.

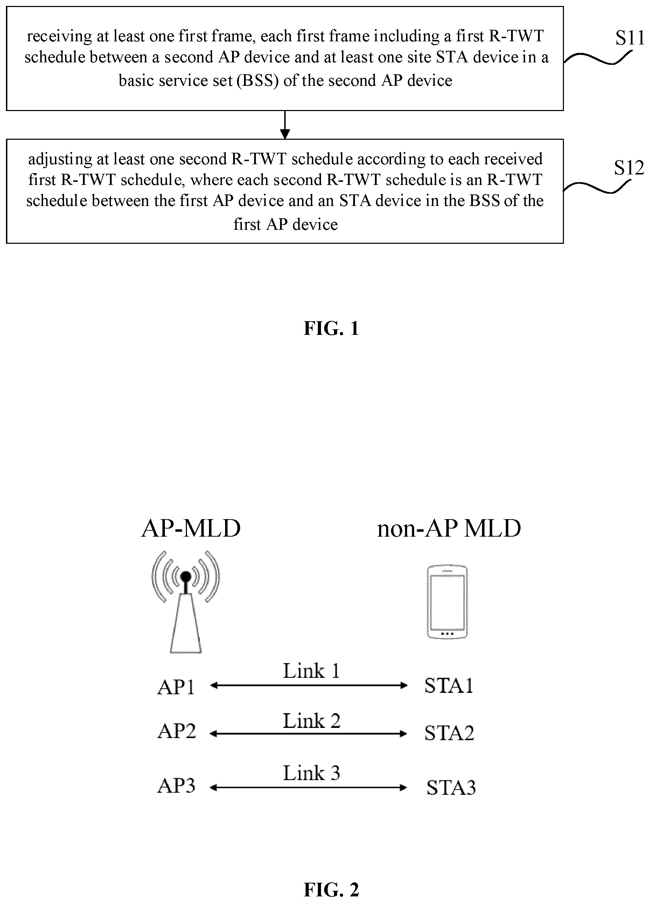

The present disclosure provides an R-TWT schedule adjustment method, which can be applied to a first AP device. For details, please refer to FIG. 1, which is a flow chart of the R-TWT schedule adjustment method provided by the present disclosure.

Optionally, the method may include the following steps:
Step S11: receiving at least one first frame, each first frame including a first R-TWT schedule between a second AP device and at least one site STA device in a basic service set (BSS) of the second AP device.

In the embodiment of the present disclosure, the first AP device and each second AP device form an overlapping basic service set (OBSS), and the first AP device is any one of all AP devices forming the OBSS.

In a wireless LAN, a BSS can be formed of an AP device and one or more station devices that communicate with the AP device. A basic service set can be connected to a distribution system (DS) through its AP device, and then connected to another basic service set to form an extended service set (ESS).

Optionally, the AP device may be a device with a wireless to wired bridging function, and the AP device is responsible for extending the services provided by the wired network to the wireless network; the STA device may be an electronic device with a wireless network access function, and provide a frame delivery service to enable information to be transmitted.

In the embodiment of the present disclosure, the overlapping part of the BSS formed by at least one AP device is the OBSS, and any AP device or STA device in the embodiment of the present disclosure can be a device that supports multi-link (MLD), for example, may be represented as AP MLD and Non-AP MLD, respectively.

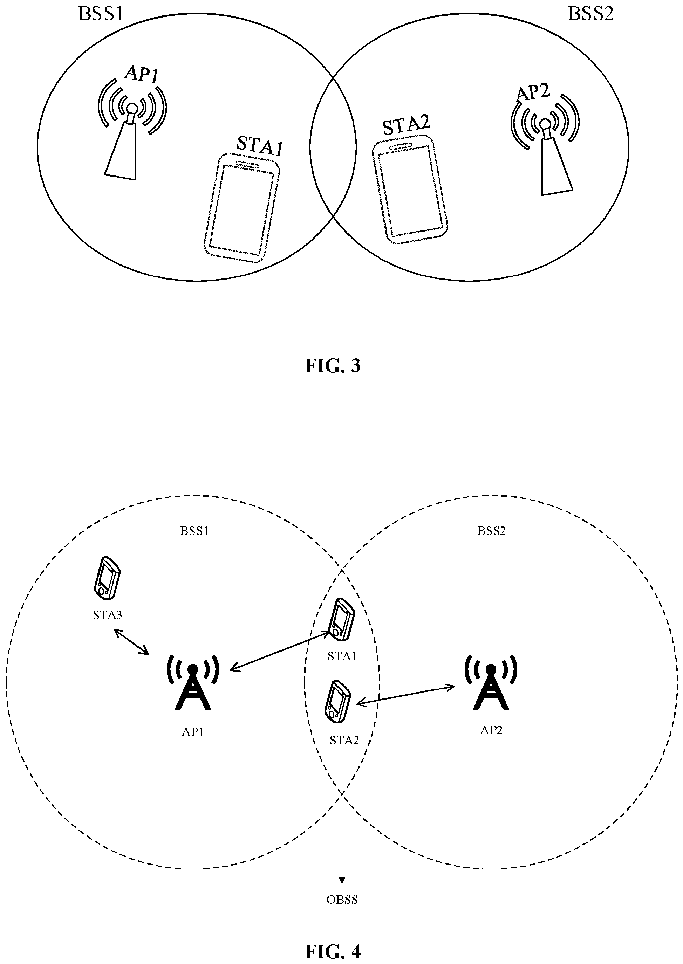

As a first example, referring to FIG. 2 and FIG. 3, the AP MLD may represent an access point device supporting a multi-link communication function, and the non-AP MLD may represent a station device supporting a multi-link communication function.

Referring to FIG. 2, the AP MLD may include three affiliated AP devices, such as AP1, AP2 and AP3 as shown in FIG. 2; each AP device may operate in link 1, link 2 and link 3 respectively; the non-AP MLD may also include three affiliated STA devices, such as STA1, STA2 and STA3 as shown in FIG. 2; the STA1 operates in link 1, the STA2 operates in link 2 and the STA3 operates in link 3. In FIG. 3, the AP1 and the STA1 form the BSS1, and the AP2 and the STA2 form the BSS2. In the example of FIG. 2, it is assumed that the AP1 communicates with the STA1 through the corresponding first link Link 1, similarly, the AP2 communicates with the STA2 through the corresponding second link Link 2, and the AP device communicates with the STA3 through the third link Link 3. In addition, Link 1 to Link 3 may be multiple links at different frequencies, for example, links at 2.4 GHz, 5 GHz, and 6 GHz, or several links of the same or different bandwidths at 2.4 GHz. In addition, multiple channels may exist under each link. It can be understood that the communication scenario shown in FIG. 2 is only exemplary and the concept of the present disclosure is not limited to this. For example, the AP MLD can be connected to multiple (three) non-AP MLDs, or in each link, the AP device can communicate with multiple other types of site devices.

As shown in FIG. 4, FIG. 4 is a schematic diagram of the OBSS scenario provided by an embodiment of the present disclosure. The AP1 forms the BSS1 within a certain frequency band, and the AP2 forms the BSS2 within the same frequency band. The overlapping part of the BSS1 and the BSS2 is the OBSS.

In the embodiment, the STA1 and the STA2 are both located in the OBSS, the STA3 is located outside the OBSS, and the STA1 and the STA3 respectively establish communication links with the AP1, and the STA1 and the STA3 can communicate with the AP1, and the STA2 establishes a communication link with the AP2, and the STA2 can communicate with the AP2.

In the embodiment of the present disclosure, any AP device forming an OBSS may send a first frame to other AP devices corresponding to the OBSS. For each first AP device, the first frame sent by the AP device includes an R-TWT schedule between the AP device and at least one STA device in the OBSS of the AP device.

In the embodiment of the present disclosure, the first AP device is any AP device corresponding to the OBSS, and the other AP devices except the first AP device among all the AP devices corresponding to the OBSS are second AP devices. For the first AP device in the embodiment of the present disclosure, the first AP device can receive a first frame sent by at least one second AP device, and the first frame sent by each second AP device includes an R-TWT schedule between the second AP device and at least one STA device in the BSS (for the convenience of description, it is referred to as the first R-TWT schedule in the embodiment of the present disclosure).

As an example, the first AP device may receive the first frames sent by all second AP devices.

As an example, the first frame sent by each second AP device includes a first R-TWT schedule between the second AP device and at least one STA device in the BSS, and the second AP device has an independent first R-TWT schedule with each STA device in the BSS.

As an example, the first frame sent by each second AP device includes a first R-TWT schedule between the second AP device and at least one STA device located in the OBSS within the BSS of the second AP device.

In the embodiment, the first frame sent by each AP device may be a beacon frame.

Step S12: adjusting at least one second R-TWT schedule according to each received first R-TWT schedule, where each second R-TWT schedule is an R-TWT schedule between the first AP device and an STA device in the BSS of the first AP device.

In an embodiment of the present disclosure, the first AP device may adjust the second R-TWT schedule between the first AP device and at least one STA device within the BSSS of the first AP device according to the received first R-TWT schedules.

Optionally, the first AP device may determine whether the second R-TWT schedule between the first AP device and each STA device within the BSS of the first AP device supports the coordination function between BSSs, and then adjust the second R-TWT schedule supporting the coordination function between BSSs according to each received first R-TWT schedule, so that the service time of the second R-TWT schedule supporting the coordination function between BSSs after adjustment is independent of the following service time:
the service time of the first R-TWT schedule that does not support the coordination function between BSSs in each received first R-TWT schedule; and
among the received first R-TWT schedules, the service time of the first R-TWT schedule that supports the coordination function between BSSs after adjustment.

In the embodiment, each first R-TWT schedule supporting the coordination function between BSSs is adjusted by a second AP device that sends a first frame including the first R-TWT schedule.

Optionally, for each second R-TWT schedule that supports the coordination function between BSSs, if the second R-TWT schedule supports coordination in time domain, the first AP device can adjust the time slot of the service time of the second R-TWT schedule. If the second R-TWT schedule supports coordination in frequency domain, the first AP device can adjust the frequency domain resources of the service time of the second R-TWT schedule, such as reallocating channel bandwidth.

In the R-TWT schedule adjustment method applied to the first AP device provided in the present disclosure, each first frame includes at least one broadcast target wake-up time parameter setting (Broadcast TWT Parameter Set) field, and each Broadcast TWT Parameter Set field includes a first R-TWT schedule between a second AP device and an STA device in the BSS of the second AP device.

For the first frame sent by each second AP device, the first frame includes at least one Broadcast TWT Parameter Set field, and each Broadcast TWT Parameter Set field includes the first R-TWT schedule between the second AP device and an STA device in the BSS of the second AP device, which may specifically include relevant protocol information such as service time and target wake-up time.

Optionally, each first frame includes a target wake-up time element (TWT element) field, the target wake-up time element field includes a target wake-up time information (TWT Parameter Information) field, and the target wake-up time information field includes at least one broadcast target wake-up time.

In the R-TWT schedule adjustment method applied to the first AP device provided in the present disclosure, each Broadcast TWT Parameter Set field further includes a first identification, which setting to a first value indicates that the first R-TWT schedule included in the Broadcast TWT Parameter Set field supports the coordination function between BSSs, and the first identification setting to a second value indicates that the first R-TWT schedule included in the Broadcast TWT Parameter Set field does not support the coordination function between BSSs.

In the embodiment, the first value may be 1, and the second value may be 0, which is not limited here.

In the embodiment, the first identification may be a restricted target wake-up time coordination support (Restricted TWT Coordination Support) identification.

As an example, for each second AP device, the first frame sent by each second AP device includes multiple Broadcast TWT Parameter Set fields, each Broadcast TWT Parameter Set field includes a first R-TWT schedule between the second AP device and a STA device in the BSS of the second AP device, and each Broadcast TWT Parameter Set field further includes a first identification. The first identification in each Broadcast TWT Parameter Set field setting to a first value indicates that the first R-TWT schedule in the same Broadcast TWT Parameter Set field supports the coordination function between BSSs, and the first identification setting to a second value indicates that the first R-TWT schedule in the same Broadcast TWT Parameter Set field does not support the coordination function between BSSs.

In the R-TWT schedule adjustment method applied to the first AP device provided in the present disclosure, each Broadcast TWT Parameter Set field in each first frame includes a Broadcast TWT Information field (Broadcast TWT Info subfield), and each Broadcast TWT Information field includes a first identification for indicating whether the first R-TWT schedule in the corresponding Broadcast TWT Parameter Set field supports the coordination function between BSSs.

As an example, any Broadcast TWT Parameter Set field may be as follows:

| | | | | | | |
|---|---|---|---|---|---|---|
| | Request Type | Target Wake Time | Nominal Minimum TWT Wake Duration | TWT Wake Interval Mantissa | Broadcast TWT Info | Restricted TWT Coordination Info |
| Octets: | 2 | 2 | 1 | 2 | 2 | 1 |

In the embodiment, the Broadcast TWT Parameter Set field (Broadcast TWT Parameter Set) includes a broadcast target wake-up time information (Broadcast TWT Info) field, and the Broadcast TWT Information field can be 2 octets (Octets).

As an example, any Broadcast TWT Information field may be as follows:

| | | | | | |
|---|---|---|---|---|---|
| | Restricted TWT Traffic Info Present | Restricted TWT Schedule Full | Restricted TWT Coordination Support | Broadcast TWT ID | Broadcast TWT Persistence |
| Bits: | 1 | 1 | 1 | 5 | 8 |

In the embodiment, the Broadcast TWT Information field (Broadcast TWT Info subfield) includes a restricted target wake-up time coordination support (Restricted TWT Coordination Support) identification, which is the first identification, used to indicate whether the R-TWT schedule in the same Broadcast TWT Parameter Set field supports the coordination function between BSSs.

In the embodiment, the restricted target wake-up time coordination support (Restricted TWT Coordination Support) identification can be 1 bit.

In the R-TWT schedule adjustment method applied to the first AP device provided in the present disclosure, for each first frame, when the first R-TWT schedule included in each Broadcast TWT Parameter Set field in the first frame supports the coordination function between BSSs, that is, when the identification value of the first identification included in each Broadcast TWT Parameter Set field in the first frame is a first value, the Broadcast TWT Parameter Set field also includes a second identification, and the second identification is used to indicate the coordination type supported by the first R-TWT schedule included in the Broadcast TWT Parameter Set field.

In the embodiment, for each first frame, when the first R-TWT schedule included in the Broadcast TWT Parameter Set field in the first frame supports the coordination function between BSSs, that is, when the identification value of the first identification included in each Broadcast TWT Parameter Set field in the first frame is the first value, the Broadcast TWT Parameter Set field also includes a second identification, and the second identification setting to a third value indicates that the first R-TWT schedule included in the Broadcast TWT Parameter Set field supports coordination in time domain (Time slots based coordination), and the second identification setting to a fourth value indicates that the first R-TWT schedule included in the Broadcast TWT Parameter Set field supports coordination in frequency domain (Frequency domain based coordination).

The second identification may be a coordination type (Coordination Type) identification, which is not limited here.

The third value may be 0, and the fourth value may be 1, which is not limited here.

In the R-TWT schedule adjustment method applied to the first AP device provided in the present disclosure, for each first frame, each Broadcast TWT Parameter Set field in the first frame further includes a third identification, and the third identification is used to indicate the number of AP devices in the OBSS.

The third identification can be the Number of AP in OBSS identification, which is not limited here.

In the embodiment, for each first frame, each Broadcast TWT Parameter Set field in the first frame includes a restricted target wake-up time coordination information (Restricted TWT Coordination Info) field, and the R-TWT coordination information field in each Broadcast TWT Parameter Set field includes the above-mentioned third identification.

In the R-TWT schedule adjustment method applied to the first AP device provided in the present disclosure, for each first frame, when the first R-TWT schedule included in each Broadcast TWT Parameter Set field in the first frame supports the coordination function between BSSs, that is, when the identification value of the first identification included in each Broadcast TWT Parameter Set field in the first frame is the first value, the Broadcast TWT Parameter Set field further includes a restricted target wake-up time coordination information (Restricted TWT Coordination Info) field, and the R-TWT coordination information field includes a second identification for indicating that the same Broadcast TWT Parameter Set field includes a supported coordination type.

As an example, any Broadcast TWT Parameter Set field may be as follows:

| | | | | | | |
|---|---|---|---|---|---|---|
| | Request Type | Target Wake Time | Nominal Minimum TWT Wake Duration | TWT Wake Interval Mantissa | Broadcast TWT Info | Restricted TWT Coordination Info |
| Octets: | 2 | 2 | 1 | 2 | 2 | 1 |

In the embodiment, the Broadcast TWT Parameter Set field (Broadcast TWT Parameter Set) includes a restricted target wake-up time coordination information (Restricted TWT Coordination Info) field, and the R-TWT coordination information field can be 1 octet.

As an example, any R-TWT coordination information field may be as follows:

| | | | |
|---|---|---|---|
| | Number of AP in OBSS | Coordination Type | Reserved |
| Bits: | 3 | 2 | |

In the embodiment, the restricted target wake-up time coordination information (Restricted TWT Coordination Info) field includes a third identification (Number of AP in OBSS), and when the corresponding R-TWT schedule supports the coordination function between BSSs, it also includes a second identification (Coordination Type). The third identification is used to indicate the number of AP devices in the OBSS, and the second identification is used to indicate the coordination type supported by the R-TWT schedule in the same Broadcast TWT Parameter Set field when supporting the coordination function between BSSs.

In the embodiment, the second identification (Coordination Type) identification can be 2 bits, and the third identification (Number of AP in OBSS) can be 3 bits.

In the embodiment, when the identification value of the second identification (Coordination Type) identification is 0, it is used to indicate that the R-TWT schedule included in the same Broadcast TWT Parameter Set field supports coordination in time domain (Time slots based coordination); when the identification value of the second identification (Coordination Type) identification is 1, it is used to indicate that the R-TWT schedule included in the same Broadcast TWT Parameter Set field supports coordination in frequency domain (Frequency domain based coordination).

In the R-TWT schedule adjustment method applied to the first AP device provided in the present disclosure, the adjusting at least one second R-TWT schedule according to the received first R-TWT schedules, including: when there is at least one R-TWT schedule supporting coordination in time domain among the second R-TWT schedules (the second R-TWT schedule supporting coordination in time domain is referred to as the third R-TWT schedule in the embodiment of the present disclosure), the service time of each third R-TWT schedule is adjusted.

In the embodiment, the service time of each adjusted third R-TWT schedule is located after the service time of all R-TWT schedules that do not support coordination in time domain, that is, the service time of each adjusted third R-TWT schedule is located after all first R-TWT schedules and second R-TWT schedules that do not support coordination in time domain.

Optionally, if none of the received first R-TWT schedules support coordination in time domain, the service time of each adjusted third R-TWT schedule is located after the service time of all second R-TWT schedules that do not support coordination in time domain and all first R-TWT schedules.

In the embodiment, if all the received first R-TWT schedules do not support coordination in time domain, the service times of the adjusted third R-TWT schedules are independent of each other, that is, the service times of the adjusted third R-TWT schedules do not overlap with each other.

Moreover, the order of service time of each adjusted third R-TWT schedule is consistent with the order of target wake-up time of the third R-TWT schedule before adjustment, that is, the order of target wake-up time of each adjusted third R-TWT schedule is consistent with the order of target wake-up time of the third R-TWT schedule before adjustment.

Optionally, if there is at least one R-TWT schedule that supports coordination in time domain among the received first R-TWT schedules (in the embodiment of the present disclosure, the first R-TWT schedule that supports coordination in time domain is referred to as the fourth R-TWT schedule), for each fourth R-TWT schedule, the second AP device that sends a first frame including the fourth R-TWT schedule adjusts the service time of the R-TWT schedule so that the service time of each adjusted third R-TWT schedule and the service time of each adjusted fourth R-TWT schedule are located after the service time of all second R-TWT schedules that do not support coordination in time domain and all first R-TWT schedules that do not support coordination in time domain.

In the embodiment, if there is at least one fourth R-TWT schedule that supports coordination in time domain among the received first R-TWT schedules, the service times of each adjusted third R-TWT schedule and each adjusted fourth R-TWT schedule are independent of each other, that is, the service times of each adjusted third R-TWT schedule and each adjusted third R-TWT schedule do not overlap with each other.

Moreover, the order of service time of each adjusted third R-TWT schedule and each adjusted fourth R-TWT schedule is consistent with a first order, that is, the order of target wake-up time of each adjusted third R-TWT schedule and each adjusted fourth R-TWT schedule is consistent with the first order.

In the embodiment, the first order is the order of target wake-up times of each third R-TWT schedule before adjustment and each fourth R-TWT schedule before adjustment.

Based on this, after each AP device in the OBSS adjusts the service time of the R-TWT schedule that supports coordination in time domain, the service time of each adjusted R-TWT schedule does not overlap, so that when the AP device corresponding to each adjusted R-TWT schedule communicates with the STA device, no signal interference will occur between the communication links.

In the R-TWT schedule adjustment method applied to the first AP device provided in the present disclosure, the adjusting at least one second R-TWT schedule according to the received first R-TWT schedules, further includes: when there is at least one R-TWT schedule supporting coordination in frequency domain among the second R-TWT schedules (in the embodiment of the present disclosure, the second R-TWT schedule supporting coordination in frequency domain is referred to as the fifth R-TWT schedule), the frequency domain resources of each fifth R-TWT schedule are adjusted.

Optionally, if all received first R-TWT schedules do not support coordination in frequency domain, the frequency domain resources of each adjusted fifth R-TWT schedule are independent of each other.

Optionally, if there is at least one R-TWT schedule that supports coordination in frequency domain among all the received first R-TWT schedules (in the embodiment of the present disclosure, the first R-TWT schedule that supports coordination in frequency domain is referred to as the sixth R-TWT schedule), for each sixth R-TWT schedule, the sixth R-TWT schedule is adjusted by the second AP device that sends the first frame including the sixth R-TWT schedule, so that the frequency domain resources of each adjusted fifth R-TWT schedule and the frequency domain resources of each adjusted sixth R-TWT schedule are independent of each other, that is, the frequency domain resources of each adjusted fifth R-TWT schedule and the frequency domain resources of each adjusted sixth R-TWT schedule do not overlap with each other.

In the embodiment, when any AP device adjusts the frequency domain resources of any R-TWT schedule that supports coordination in frequency domain, it can allocate independent frequency domain resources for the R-TWT schedule that supports coordination in frequency domain, such as the channel bandwidth for low-latency service communications, etc., which is not limited herein.

In the R-TWT schedule adjustment method applied to the first AP device provided in the present disclosure, the first AP device can also send a first frame to each second AP. The first frame sent by the first AP device includes a second R-TWT schedule between the first AP device and at least one STA device in the BSS in which it is located, so that each second AP device adjusts the R-TWT schedule between the second AP and at least one STA device in the BSS of the second AP device according to the received R-TWT schedule sent by other AP devices.

In the embodiment, the first frame sent by the firstAP device also includes at least one Broadcast TWT Parameter Set field, and each Broadcast TWT Parameter Set field includes a second R-TWT schedule.

In the embodiment, each Broadcast TWT Parameter Set field in the first frame sent by the first AP device also includes a first identification, and the first identification setting to a first value indicates that the second R-TWT schedule included in the Broadcast TWT Parameter Set field supports the coordination function between BSSs, and the first identification setting to a second value indicates that the second R-TWT schedule included in the Broadcast TWT Parameter Set field does not support the coordination function between BSSs.

In the embodiment, when the second R-TWT schedule included in each Broadcast TWT Parameter Set field in the first frame sent by the first AP device supports the coordination function between BSSs, the Broadcast TWT Parameter Set field also includes a second identification, and the second identification setting to a third value indicates that the second R-TWT schedule included in the Broadcast TWT Parameter Set field supports coordination in time domain, and the second identification setting to a fourth value indicates that the second R-TWT schedule included in the Broadcast TWT Parameter Set field supports coordination in frequency domain.

In the embodiment, each Broadcast TWT Parameter Set field in the first frame sent by the first AP device includes a Broadcast TWT Information field, and the Broadcast TWT Information field includes a first identification.

In the embodiment, each Broadcast TWT Parameter Set field in the first frame sent by the first AP device includes a R-TWT coordination information field, and the R-TWT coordination information field includes a third identification, and the third identification is used to indicate the number of AP devices in the OBSS.

In the embodiment, when the second R-TWT schedule included in each Broadcast TWT Parameter Set field in the first frame sent by the first AP device supports the coordination function between BSSs, the R-TWT coordination information field includes a second identification.

According to the R-TWT schedule adjustment method provided in the embodiment of the present disclosure, the R-TWT schedule supporting coordination in time domain between at least one AP device in the OBSS and at least one STA device in the BSS of the AP device can be adjusted, so that the service time of each R-TWT schedule supporting coordination in time domain after adjustment is independent of each other, thereby reducing the interference between each communication link when the corresponding AP device and STA device perform low-latency service communication. At the same time, the R-TWT schedule supporting coordination in frequency domain between at least one AP device in the OBSS and at least one STA device in the BSS of the AP device can be adjusted, so that the frequency domain resources of each R-TWT schedule supporting coordination in frequency domain after adjustment are independent of each other, thereby reducing the interference caused to each communication link by the overlap of frequency domain resources during low-latency service communication.

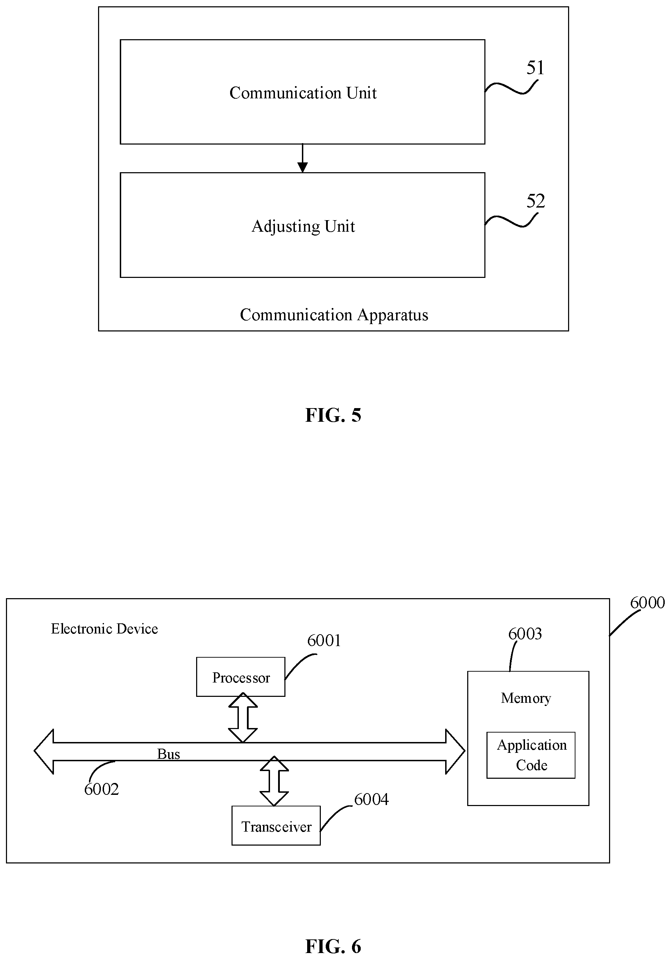

As shown in FIG. 5, an embodiment of the present disclosure provides an R-TWT schedule adjustment apparatus, including:
a communication unit 51, configured to receive at least one first frame, each of which includes a first restricted target wake-up time (R-TWT) schedule between a second AP device and at least one station (STA) device in the basic service set (BSS) of the second AP device, and the first AP device and each of the second AP devices form an overlapping basic service set (OBSS); and
an adjusting unit 52, configured to adjust at least one second R-TWT schedule according to the respective received first R-TWT schedules, and each second R-TWT schedule is an R-TWT schedule between the first AP device and an STA device in the BSS of the first AP device.

Optionally, in an embodiment of the present disclosure, each first frame includes at least one Broadcast TWT Parameter Set field, and each Broadcast TWT Parameter Set field includes one first R-TWT schedule between the second AP device and the STA device in the BSS of the second AP device.

Optionally, in an embodiment of the present disclosure, each Broadcast TWT Parameter Set field further includes a first identification, and wherein the first identification setting to a first value indicates that the first R-TWT schedule included in the Broadcast TWT Parameter Set field supports a coordination function between BSSs, and the first identification setting to a second value indicates that the first R-TWT schedule included in the Broadcast TWT Parameter Set field does not support the coordination function between BSSs.

Optionally, in an embodiment of the present disclosure, when the first R-TWT schedule included in the Broadcast TWT Parameter Set field supports the coordination function between BSSs, the Broadcast TWT Parameter Set field further includes a second identification, and the second identification setting to a third value indicates that the first R-TWT schedule included in the Broadcast TWT Parameter Set field supports coordination in time domain, and the second identification setting to a fourth value indicates that the first R-TWT schedule included in the Broadcast TWT Parameter Set field supports coordination in frequency domain.

Optionally, in an embodiment of the present disclosure, each Broadcast TWT Parameter Set field includes a Broadcast TWT Information field, and the Broadcast TWT Information field includes the first identification.

Optionally, in an embodiment of the present disclosure, each Broadcast TWT Parameter Set field includes a R-TWT coordination information field, and the R-TWT coordination information field includes a third identification, and the third identification is used to indicate a number of the AP device in the OBSS.

Optionally, in an embodiment of the present disclosure, when the first R-TWT schedule included in the Broadcast TWT Parameter Set field supports the coordination function between BSSs, the R-TWT coordination information field includes the second identification.

Optionally, in an embodiment of the present disclosure, the adjusting unit 52 is configured to:
when at least one third R-TWT schedule supporting coordination in time domain exists among the second R-TWT schedule, adjust a service time of each third R-TWT schedule, and each adjusted service time of the third R-TWT schedule is located after the service time of all R-TWT schedules that do not support coordination in time domain;
wherein, if no first R-TWT schedule supports coordination in time domain, each adjusted service time of the third R-TWT schedule is independent of each other, and an order of the service time is consistent with an order of target wake-up time of the third R-TWT schedule before adjustment; and
wherein, if at least one fourth R-TWT schedule that supports coordination in time domain exists among the first R-TWT schedule, each adjusted service time of the third R-TWT schedule and each adjusted service time of the fourth R-TWT schedule are independent of each other, and the order of the service time is consistent with a first order, wherein the first order is an order of target wake-up time of the third R-TWT schedule before adjustment and target wake-up time of the fourth R-TWT schedule before adjustment, and the service time of each fourth R-TWT schedule is adjusted by the second AP device that sends the first frame including the fourth R-TWT schedule.

Optionally, in an embodiment of the present disclosure, the adjusting unit 52 is further configured to:
when at least one fifth R-TWT schedule supporting coordination in frequency domain exists among the second R-TWT schedule, adjust a frequency domain resource of each fifth R-TWT schedule;
wherein, if no first R-TWT schedule supports coordination in frequency domain, each adjusted frequency domain resource of the fifth R-TWT schedule is independent of each other; and if at least one sixth R-TWT schedule that supports coordination in frequency domain exists among the first R-TWT schedule, each adjusted frequency domain resource of the fifth R-TWT schedule and each adjusted frequency domain resource of the sixth R-TWT schedule are independent of each other, and the frequency domain resource of each sixth R-TWT schedule is adjusted by the second AP device that sends the first frame including the sixth R-TWT schedule.

Optionally, in an embodiment of the present disclosure, each first message is a beacon frame.

Embodiments of the present disclosure also provides an electronic device, as shown in FIG. 6, the electronic device 6000 shown in FIG. 6 includes: a processor 6001 and a memory 6003. The processor 6001 and the memory 6003 are connected, such as through a bus 6002. Optionally, the electronic device 6000 may further include a transceiver 6004. It should be noted that in actual applications, the transceiver 6004 is not limited to one, and the structure of the electronic device 6000 does not constitute a limitation on the embodiment of the present disclosure.

The memory 6003 is used to store the application code for executing the embodiment of the present disclosure, and the execution is controlled by the processor 6001. When the electronic device 6000 acts as a first AP device, the processor 6001 is used to execute the application code stored in the memory 6003 to implement:
receiving at least one first frame, each of the first frames includes a first restricted target wake-up time (R-TWT) schedule between a second AP device and at least one station (STA) device in a basic service set (BSS) in which the second AP device is located, and the first AP device and each of the second AP devices form an overlapping basic service set (OBSS); and
adjusting at least one second R-TWT schedule according to each of the received first R-TWT schedules, and each of the second R-TWT schedules is an R-TWT schedule between the first AP device and an STA device in the BSS in which the first AP device is located.

Optionally, in an embodiment of the present disclosure, each first frame includes at least one Broadcast TWT Parameter Set field, and each Broadcast TWT Parameter Set field includes one first R-TWT schedule between the second AP device and the STA device in the BSS of the second AP device.

Optionally, in an embodiment of the present disclosure, each Broadcast TWT Parameter Set field further includes a first identification, and wherein the first identification setting to a first value indicates that the first R-TWT schedule included in the Broadcast TWT Parameter Set field supports a coordination function between BSSs, and the first identification setting to a second value indicates that the first R-TWT schedule included in the Broadcast TWT Parameter Set field does not support the coordination function between BSSs.

Optionally, in an embodiment of the present disclosure, when the first R-TWT schedule included in the Broadcast TWT Parameter Set field supports the coordination function between BSSs, the Broadcast TWT Parameter Set field further includes a second identification, and the second identification setting to a third value indicates that the first R-TWT schedule included in the Broadcast TWT Parameter Set field supports coordination in time domain, and the second identification setting to a fourth value indicates that the first R-TWT schedule included in the Broadcast TWT Parameter Set field supports coordination in frequency domain.

Optionally, in an embodiment of the present disclosure, each Broadcast TWT Parameter Set field includes a Broadcast TWT Information field, and the Broadcast TWT Information field includes the first identification.

Optionally, in an embodiment of the present disclosure, each Broadcast TWT Parameter Set field includes a R-TWT coordination information field, and the R-TWT coordination information field includes a third identification, and the third identification is used to indicate a number of the AP device in the OBSS.

Optionally, in an embodiment of the present disclosure, when the first R-TWT schedule included in the Broadcast TWT Parameter Set field supports the coordination function between BSSs, the R-TWT coordination information field includes the second identification.

Optionally, in an embodiment of the present disclosure, the processor 6001 is configured to:
when at least one third R-TWT schedule supporting coordination in time domain exists among the second R-TWT schedule, adjust a service time of each third R-TWT schedule, and each adjusted service time of the third R-TWT schedule is located after the service time of all R-TWT schedules that do not support coordination in time domain;
wherein, if no first R-TWT schedule supports coordination in time domain, each adjusted service time of the third R-TWT schedule is independent of each other, and an order of the service time is consistent with an order of target wake-up time of the third R-TWT schedule before adjustment; and
wherein, if at least one fourth R-TWT schedule that supports coordination in time domain exists among the first R-TWT schedule, each adjusted service time of the third R-TWT schedule and each adjusted service time of the fourth R-TWT schedule are independent of each other, and the order of the service time is consistent with a first order, wherein the first order is an order of target wake-up time of the third R-TWT schedule before adjustment and target wake-up time of the fourth R-TWT schedule before adjustment, and the service time of each fourth R-TWT schedule is adjusted by the second AP device that sends the first frame including the fourth R-TWT schedule.

Optionally, in an embodiment of the present disclosure, the processor 6001 is further configured to:
when at least one fifth R-TWT schedule supporting coordination in frequency domain exists among the second R-TWT schedule, adjust a frequency domain resource of each fifth R-TWT schedule;
wherein, if no first R-TWT schedule supports coordination in frequency domain, each adjusted frequency domain resource of the fifth R-TWT schedule is independent of each other; and if at least one sixth R-TWT schedule that supports coordination in frequency domain exists among the first R-TWT schedule, each adjusted frequency domain resource of the fifth R-TWT schedule and each adjusted frequency domain resource of the sixth R-TWT schedule are independent of each other, and the frequency domain resource of each sixth R-TWT schedule is adjusted by the second AP device that sends the first frame including the sixth R-TWT schedule.

Optionally, in an embodiment of the present disclosure, each first message is a beacon frame.

The bus 6002 may include a path for transmitting information between the above components. The bus 6002 may be a PCI (Peripheral Component Interconnect) bus or an EISA (Extended Industry Standard Architecture) bus, or the like. The bus 6002 may be divided into an address bus, a data bus, a control bus, and the like. For ease of representation, FIG. 6 only uses one thick line, but does not mean that there is only one bus or one type of bus.

The memory 6003 may be a Read Only Memory (ROM) or other types of static storage devices that can store static information and instructions, a Random Access Memory (RAM) or other types of dynamic storage devices that can store information and instructions, or an Electrically Erasable Programmable Read Only Memory (EEPROM), a Compact Disc Read Only Memory (CD-ROM) or other optical disk storage, optical disk storage (including compressed optical disk, laser disk, optical disk, digital versatile disk, Blu-ray disk, or the like), a magnetic disk storage medium or other magnetic storage device, or any other medium that can be used to carry or store the desired program code in the form of instructions or data structures and can be accessed by a computer, but is not limited thereto.

An embodiment of the present disclosure provides a computer-readable storage medium, on which a computer program is stored. When the computer-readable storage medium is run on a computer, the computer can execute the corresponding contents of the aforementioned method embodiment.

It should be understood that, although the steps in the flowchart of the accompanying drawings are displayed in sequence as indicated by the arrows, these steps are not necessarily executed in sequence in the order indicated by the arrows. Unless otherwise specified herein, there is no strict order restriction on the execution of these steps, and they can be executed in other orders. Moreover, at least a part of the steps in the flowchart of the accompanying drawings may include multiple sub-steps or multiple stages, and these sub-steps or stages are not necessarily executed at the same time, but can be executed at different times, and their execution order is not necessarily sequential, but can be executed in turn or alternately with other steps or at least a part of the sub-steps or stages of other steps.

It should be noted that the computer-readable storage medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. The computer readable signal media may also be any computer readable storage medium other than computer readable storage media, which may send, propagate or transmit a program for use by or in conjunction with an instruction execution system, apparatus or device. The program code contained on the computer readable storage medium may be transmitted using any appropriate medium, including but not limited to: wires, optical cables, RF (radio frequency), etc., or any suitable combination of the above.

The computer-readable storage medium may be included in the first AP device, or may exist independently without being installed in the first AP device.

The computer-readable storage medium carries one or more programs. When the one or more programs are executed by the first AP device, the first AP device executes the R-TWT schedule adjusting method shown in the above embodiment.

According to one aspect of the present disclosure, a computer program product or a computer program is provided, the computer program product or the computer program comprising computer instructions, the computer instructions being stored in a computer-readable storage medium. A processor of a computer device reads the computer instructions from the computer-readable storage medium, and the processor executes the computer instructions, so that the computer device executes the R-TWT schedule adjusting methods provided in the above-mentioned various optional implementations.

The computer program code for carrying out operations of the embodiment of the present disclosure may be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In cases involving a remote computer, the remote computer may be connected to the user's computer through any type of network, including a local area network (LAN) or a wide area network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each block in the flow chart or block diagram can represent a module, a program segment or a part of a code, and the module, the program segment or a part of the code contains one or more executable instructions for realizing the specified logical function. It should also be noted that in some implementations as alternatives, the functions marked in the block can also occur in a sequence different from that marked in the accompanying drawings. For example, two blocks represented in succession can actually be executed substantially in parallel, and they can sometimes be executed in the opposite order, depending on the functions involved. It should also be noted that each block in the block diagram and/or flow chart, and the combination of the blocks in the block diagram and/or flow chart can be implemented with a dedicated hardware-based system that performs a specified function or operation, or can be implemented with a combination of dedicated hardware and computer instructions.

The modules involved in the embodiments described in the present disclosure may be implemented by software or hardware. The name of a module does not limit the module itself in some cases. For example, module A may also be described as "module A for performing operation B".

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, a technical solution formed by replacing the above features with technical features with similar functions disclosed in this disclosure (but not limited thereto).

## Claims

1. A restricted target wake-up time (R-TWT) schedule adjustment method, applied to a first access point (AP) device, the method comprising:
receiving at least one first frame, each first frame comprises first R-TWT schedule(s) between a second AP device and at least one station (STA) device in a basic service set (BSS) of the second AP device, and the first AP device and each second AP devices form an overlapping basic service set (OBSS); and
adjusting at least one second R-TWT schedule according to the received first R-TWT schedule(s), and each second R-TWT schedule is an R-TWT schedule between the first AP device and the STA device(s) in the BSS of the first AP device.

2. The method according to claim 1, wherein each first frame comprises at least one Broadcast TWT Parameter Set field, and each Broadcast TWT Parameter Set field comprises one first R-TWT schedule between the second AP device and the STA device(s) in the BSS of the second AP device.

3. The method according to claim 2, wherein each Broadcast TWT Parameter Set field further comprises a first identification, and wherein the first identification setting to a first value indicates that the first R-TWT schedule(s) comprised in the Broadcast TWT Parameter Set field support(s) a coordination function between BSSs, and the first identification setting to a second value indicates that the first R-TWT schedule(s) comprised in the Broadcast TWT Parameter Set field does not support the coordination function between BSSs.

4. The method according to claim 3, wherein when the first R-TWT schedule(s) comprised in the Broadcast TWT Parameter Set field supports the coordination function between BSSs, the Broadcast TWT Parameter Set field further comprises a second identification, and the second identification setting to a third value indicates that the first R-TWT schedule(s) included in the Broadcast TWT Parameter Set field supports coordination in time domain, and the second identification setting to a fourth value indicates that the first R-TWT schedule(s) included in the Broadcast TWT Parameter Set field supports coordination in frequency domain.

5. The method according to claim 3, wherein each Broadcast TWT Parameter Set field comprises a Broadcast TWT Information field, and the Broadcast TWT Information field comprises the first identification.

6. The method according to claim 4, wherein each Broadcast TWT Parameter Set field comprises a R-TWT coordination information field, and the R-TWT coordination information field comprises a third identification, and the third identification is used to indicate a number of the AP device in the OBSS.

7. The method according to claim 6, wherein when the first R-TWT schedule(s) comprised in the Broadcast TWT Parameter Set field supports the coordination function between BSSs, the R-TWT coordination information field comprises the second identification.

8. The method according to claim 1, wherein adjusting at least one second R-TWT schedule according to the received first R-TWT schedule(s) comprises:
when at least one third R-TWT schedule supporting coordination in time domain exists among the second R-TWT schedule, adjusting a service time of each third R-TWT schedule, each adjusted service time of the third R-TWT schedule being located after the service time of all R-TWT schedules that do not support coordination in time domain;
wherein, if no first R-TWT schedule supports coordination in time domain, each adjusted service time of the third R-TWT schedule is independent of each other, and an order of the service time is consistent with an order of target wake-up time of the third R-TWT schedule before adjustment; and
wherein, if at least one fourth R-TWT schedule that supports coordination in time domain exists among the first R-TWT schedule(s), each adjusted service time of the third R-TWT schedule and each adjusted service time of the fourth R-TWT schedule are independent of each other, and the order of the service time is consistent with a first order, wherein the first order is an order of target wake-up time of the third R-TWT schedule before adjustment and target wake-up time of the fourth R-TWT schedule before adjustment, and the service time of each fourth R-TWT schedule is adjusted by the second AP device that sends the first frame including the fourth R-TWT schedule.

9. The method according to claim 1, wherein the method further comprises:
when at least one fifth R-TWT schedule supporting coordination in frequency domain exists among the second R-TWT schedule, adjusting a frequency domain resource of each fifth R-TWT schedule;
wherein, if no first R-TWT schedule supports coordination in frequency domain, each adjusted frequency domain resource of the fifth R-TWT schedule is independent of each other; and if at least one sixth R-TWT schedule that supports coordination in frequency domain exists among the first R-TWT schedule(s), each adjusted frequency domain resource of the fifth R-TWT schedule and each adjusted frequency domain resource of the sixth R-TWT schedule are independent of each other, and the frequency domain resource of each sixth R-TWT schedule is adjusted by the second AP device that sends the first frame including the sixth R-TWT schedule.

10. The method according to claim 1, wherein each first message is a beacon frame.

11. An R-TWT schedule adjustment apparatus, wherein the apparatus comprises:
a communication unit, configured to receive at least one first frame, each first frame comprises first R-TWT schedule(s) between a second AP device and at least one station (STA) device in a basic service set (BSS) of the second AP device, and the first AP device and each second AP devices form an overlapping basic service set (OBSS); and
an adjusting unit, configured to adjust at least one second R-TWT schedule according to the received first R-TWT schedule(s), and each second R-TWT schedule is an R-TWT schedule between the first AP device and the STA device(s) in the BSS of the first AP device.

12. An access point (AP) device, wherein the AP device comprises a memory, a processor and a computer program stored in the memory and executable on the processor, wherein the processor implements the method according to any one of claims 1 to 10 when executing the program.

13. A computer-readable storage medium, wherein a computer program is stored on the computer-readable storage medium, and when the computer program is executed by a processor, the method according to any one of claims 1 to 10 is implemented.
